# EUROPEAN PATENT SPECIFICATION

(11) **EP 3 756 848 B1**
(45) Date of publication and mention of the grant of the patent: **04.08.2021**
(21) Application number: 20181992.7
(22) Date of filing: 24.06.2020
(51) Int. Cl.: B29C 33/44, B29C 45/44, A47G 25/14, A47G 25/34, A47G 25/48

(54) **MOLD FOR MOULDING COAT HANGERS PROVIDED WITH CLIPS**
FROMWERKZEUG ZUR FORMUNG VON KLEIDERBÜGELN, DIE MIT HÄKCHEN AUSGERÜSTET SIND
MOULE POUR LE MOULAGE DE CINTRES DOTÉS DE PINCES

(30) Priority: 28.06.2019 IT 201900010392
(43) Date of publication of application: 30.12.2020
(73) Proprietor: Stocchiero Srl, 36071 Vicenza (IT)
(72) Inventor: Stocchiero, Paolo, 36071 Vicenza (IT)
(74) Representative: Bettello, Pietro

(56) References cited:
- EP-A1- 2 261 000
- DE-A1- 3 423 301
- US-B2- 6 926 180

## Description

The present invention relates to an equipment for moulding hangers provided with clips, according to the general part of claim 1.

Among the different types of hangers currently known, those consisting of a rigid arcuate structure, provided with a central clip adapted to support the outerwear (for example a jacket and/or a shirt) and two side clips, projecting inferiorly, are widely used, which allow both the application of an underlying trouser-holders (by way of example the patent document US 6,926,180 B2, figs. 13, 15 is mentioned), and the coupling of the suspenders of other hanging garments.

Normally said hangers, which have an inverted "U"-shaped section, are made by means of a moulding operation by injecting various materials, from plastics to biological ones.

In the current state of the art, the equipment used to make hangers provided with clips comprises a mould composed of two form plates, between which the plastic material is injected to make the arcuate body, and of two pairs of carriages, which define the shape of the two side clips.

In practice, the presence of the two pairs of carriages, in addition to making the construction of the entire equipment complex and therefore expensive, also negatively affects productivity (number of pieces moulded per minute) since, after each moulding operation, in addition to opening the mould of the arcuate body, due to the vertical spacing of the two form plates, the side (precisely horizontal) movement of the two carriages is also necessary, to release the two clips, so as to allow the extractor pins to eject the entire moulded piece, which consists of the arcuate body provided with lower clips to take it out of the equipment.

In the current state of the art, there are equipments which do not require the use of carriages, but which, due to their construction shape and their way of functioning, are not suitable, in many cases, for moulding hangers provided with clips.

By way of example, patent documents EP 2261000 B1, (fig.2), EP 3372377 A1 (fig.2) DE 3423301 A1 and US 5,281,127 (fig.1) are cited, which provide that the elements with the marks are "flexible" so that, when they come out of the mould, they can be folded sideways, hence detaching from the moulded piece. EP 2 261 000 discloses ejector pins forming undercuts.

The object of the present invention is to manufacture an equipment for moulding hangers provided with clips, by means of a moulding operation by injecting plastic material which is free of the drawbacks manifested by similar equipment of the known type.

More specifically, object of the present invention is to manufacture an equipment for moulding hangers, in particular of the type for outerwear, provided with side clips, adapted for the application of trouser-holders or suspenders, which is simple to manufacture and consequently, of limited cost.

More specifically, object of the invention is to manufacture an equipment for moulding hangers, in particular of the type for outerwear, provided with side clips, adapted for the application of trouser-holders or suspenders, which functions quickly, to ensure high productivity.

In essence, object of the invention is to manufacture an equipment for moulding hangers provided with side clips which does not require the use of additional mechanisms such as, for example, two pairs of side-sliding carriages and which is composed of only a few elements, referable to the form plates of the mould and to the extractor pins, all elements being always simple and common to manufacture.

These purposes are achieved by means of a normally manufactured equipment, commonly known with the generic term of "mould", composed of two form plates arranged mutually opposed, which vary from a mutually approached position (closed mould), for defining the shape of the piece to be moulded by means of injection, to a mutually spaced position (open mould), for enabling a plurality of extractor pins, fixed on extraction plates, slidable along a direction parallel to the opening direction of the mould, inside one of the two form plates, to extract the moulded piece. This equipment is characterized in that the marks of the two side clips are obtained on the upper part of the outer side surface of the two extractor pins, which are positioned at the aforesaid side clips to be made.

Operatively, when the equipment is closed, the cavity between the two form plates, which defines the shape of the arcuate body, and the two marks obtained on the two extractor pins, which define the two opposite clips, are communicating so that, by means of a single injection operation, the entire hanger, composed of the arcuate body plus the two clips, is moulded; then, the moulded piece is ejected with the vertical sliding of the extractor pins.

The invention will be better defined by describing one of its possible embodiments, given only by way of non-limiting example, with the help of the appended drawings, wherein:
- figs. 1-5 represent views, respectively in section and in detail, of a first embodiment of the equipment according to the invention;
- figs. 6-9 represent the moulding steps with the equipment according to the invention;
- figs. 10-14 represent views, respectively in section and in detail, of a second embodiment of the equipment according to the invention;
- figs. 15-19 represent views, respectively in section and in detail, of a third embodiment of the equipment according to the invention;
- figs. 20, 21 represent two types of clips made by means of the invention;

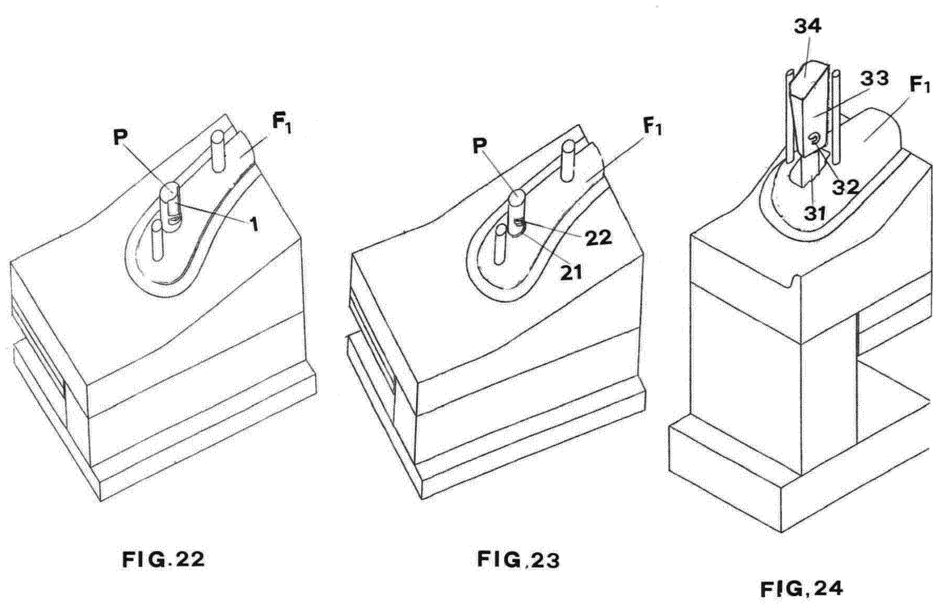

- figs. 22-24 represent perspective views of the three types of equipment, with the projecting extractor pins;

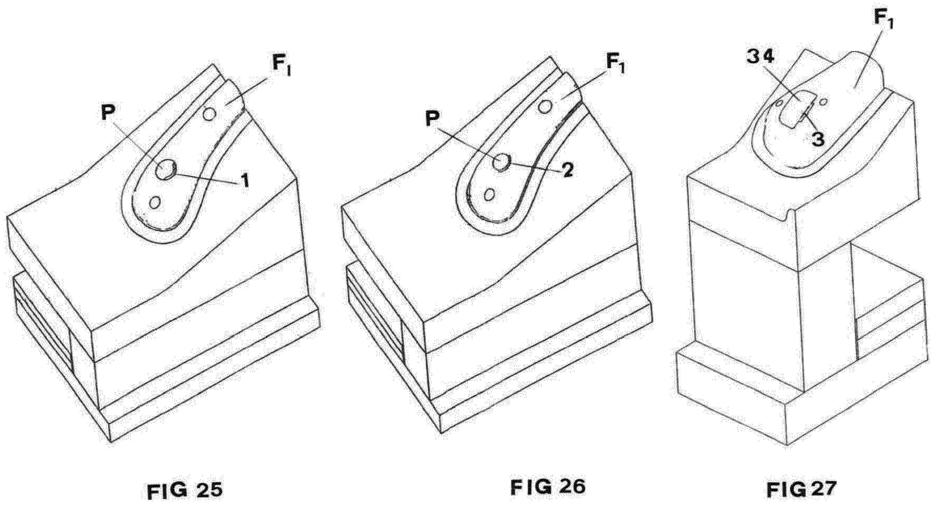

- figs. 25-27 represent perspective views of the three types of equipment, with the extractor pins moved backward.

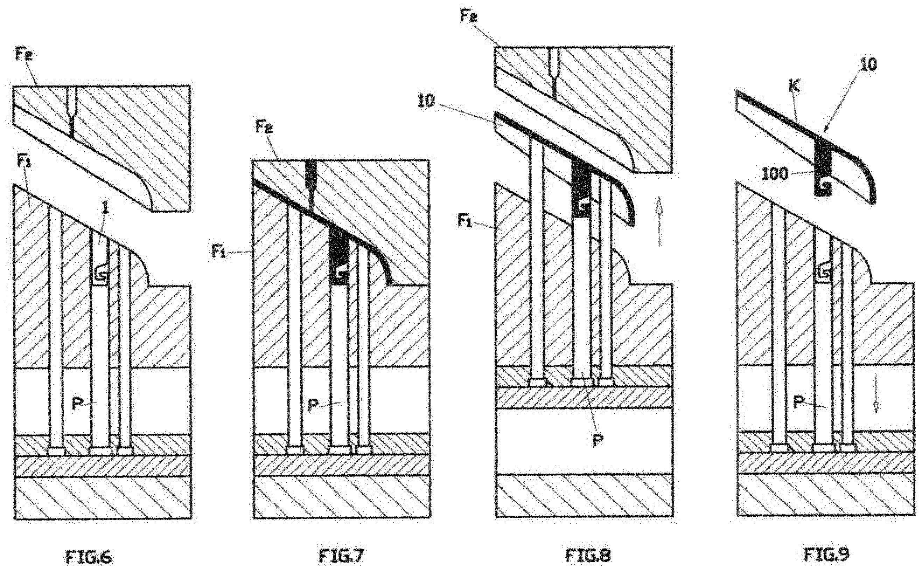

Normally the equipment, or "mould", for manufacturing hangers, identified with reference 10, consisting in a body "K" provided with two side clips, indicated with reference 100, formed by a rib 101 supporting the hook 102 projecting inferiorly, by injecting plastic material, is basically composed of two form plates, indicated with the references F₁ and F₂, arranged mutually opposed (fig. 6), which vary from a mutually approached position (closed mould), for defining the shape of the piece to be moulded by means of injecting plastic material (fig. 7), to a mutually spaced position (open mould), for enabling some pins P, integral with the extraction plates Z₁ and Z₂, slidable along a direction parallel to the opening direction of the mould, inside the form plate F₁, to extract the moulded piece from the die (fig. 8), the whole as known per se.

The aforesaid equipment is characterized in that it provides that the marks, necessary to make the two side clips 100, are obtained at the upper part of the outer side surface of the two extractor pins P, which are necessarily positioned at and coaxially with the clips 100 to be made (fig. 9).

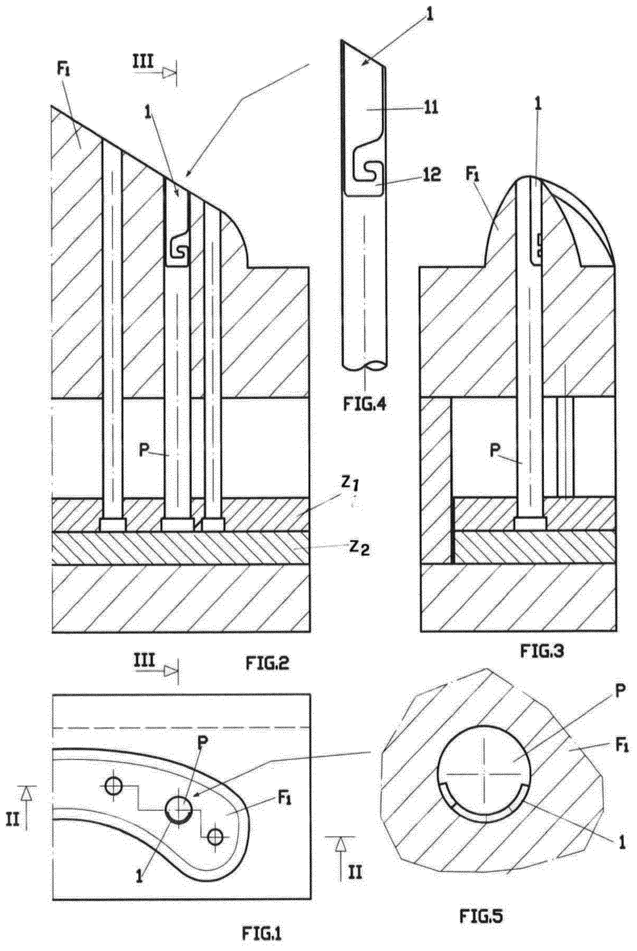

As visible in Figs. 1-5, according to a first type of embodiment, the clip 100 is obtained by means of a low-relief mark, indicated with reference 1, entirely obtained on the outer surface of the extractor pin P, which defines a large seat 11, to realise the rib 101 and a restricted seat 12, to realise the hook 102.

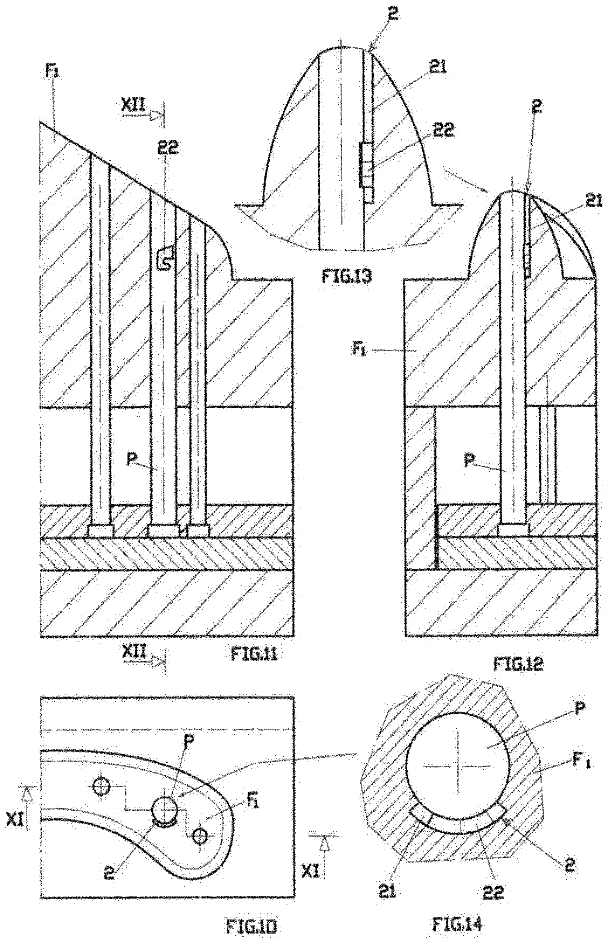

As visible in Figs. 10-14, according to a second type of embodiment, the clip 100 is obtained by means of a mark, indicated with reference 2, obtained by creating a low-relief lozenge 21, obtained on the surface of the hole of the form plate F₁ and as large as the entire clip, and by creating on the external surface of the extractor pin P a projection 22, which is conformed to the negative of the hook, such that, by mutual interpenetration, an empty space remains that is shaped as the volume of the clip 100 to be moulded.

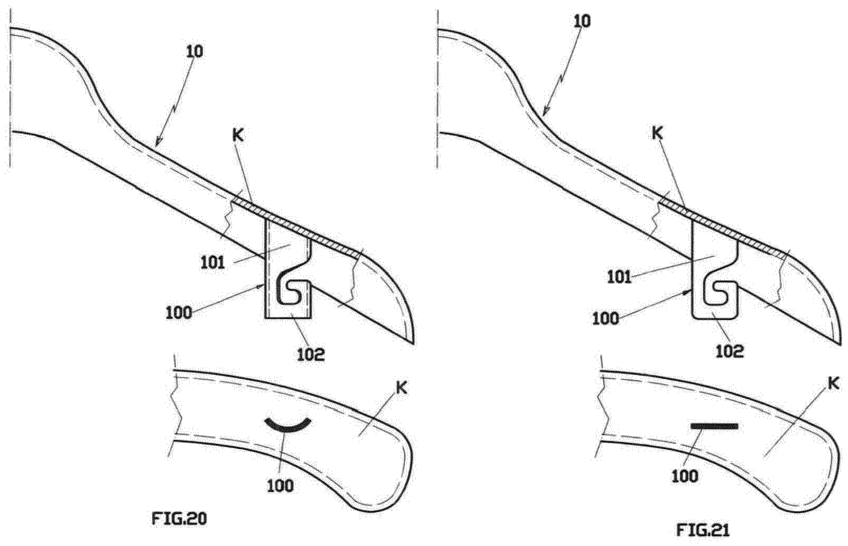

In practice, a clip 100 with an arcuate section is obtained (see fig. 20) by means of a mark which is contained, in the first type of embodiment, in the extractor pin P (see fig. 5, ref. 1) and, in the second type of embodiment, in the form plate F₁ (see fig. 14, ref. 2).

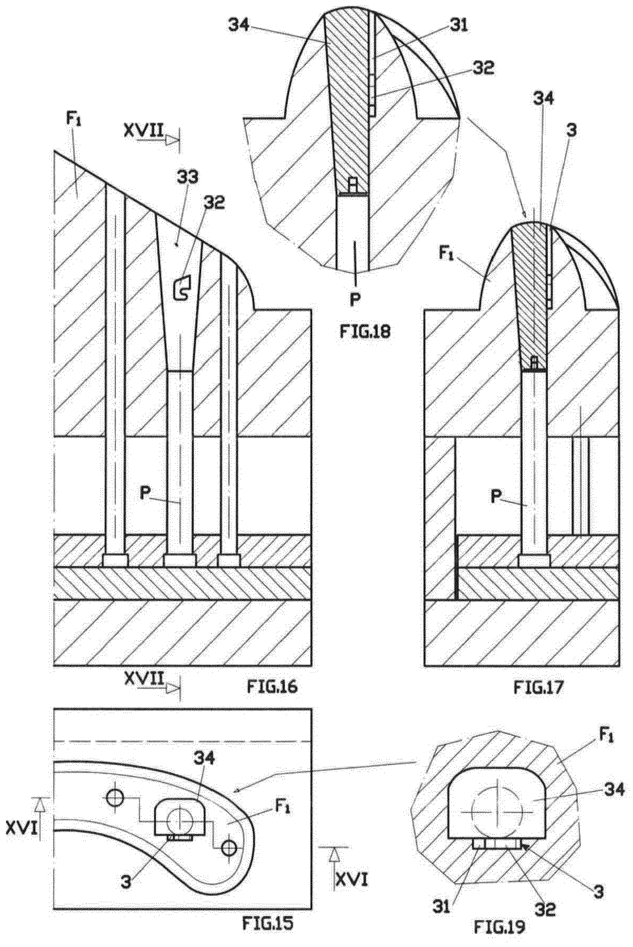

As visible in Figs. 15-19, a third type of embodiment may provide for the use of a small block 34 fixedly applied to the end of the pin P, such as to form an only single-piece element P+34 on which the marks 1 or 2 are partially or totally obtained.

In particular, it is possible to obtain flat-section clips 100 (see fig. 21) by a mark, indicated with reference 3, obtained by creating a low-relief lozenge 31, obtained on the surface of the hole of the form plate F₁ and as large as the entire clip and by creating a projection 32, conformed to the negative of the hook, on the flat surface 33 of the small block 34 firmly applied to the end of the pin P, such that, by mutual interpenetration, an empty space remains, that is shaped as the volume of the clip 100 to be moulded.

Operationally, the method for moulding hangers provided with clips using the equipment according to the invention, provides that, it passes from the "open mould" position with the extractor pins P (fig. 6) moved backward to the position of "closed mould", such as to generate, among the two form plates F₁ and F₂, the negative case of the piece which is to be obtained, i.e. the cavity that defines the shape of the arcuate body K and the two marks 1 that define the two opposite clips 100; then the material is injected such that the entire structure of the hanger 10 is obtained in a single step (fig. 7); then the mould is opened, and through removal by the extractor pins P, the whole moulded hanger 10 is ejected (fig. 8) which, subsequently, falls down or is collected, while the extractor pins P move back inward, to prepare the mould for a new working step (fig. 9).

Obviously, the mould can take on different dimensions and conformations, depending on the type of hanger to be produced, provided that the whole falls within the inventive concept defined by the following claims.

## Claims

1. EQUIPMENT FOR MOULDING HANGERS PROVIDED WITH CLIPS, of the type composed of two form plates (F₁, F₂) arranged mutually opposed, which vary from a mutually approached position (closed mould), for defining the shape of the piece to be moulded by means of injecting different materials, ranging from synthetic plastic to biological, to a mutually spaced position (open mould), for enabling extractor pins (P), fixed on extraction plates (Z₁, Z₂) slidable along a direction parallel to the opening direction of the mould, inside the form plate (F₁), to extract a moulded hanger (10) consisting in a body (K) provided with two side clips (100), formed by a rib (101) supporting a hook (102),
said equipment **being characterized in that** it provides that the marks, required to make the two side clips (100), are obtained at the upper part of the outer side surface of the two extractor pins (P), which are positioned at the aforesaid side clips (100) to be made.

2. EQUIPMENT FOR MOULDING HANGERS PROVIDED WITH CLIPS, according to claim 1, **characterized in that** it provides a low-relief mark (1), entirely obtained on the outer surface of the extractor pin (P), which defines a large seat (11) that realises the rib (101) associated with a restricted seat (12) which realises the hook (102).

3. EQUIPMENT FOR MOULDING HANGERS PROVIDED WITH CLIPS, according to claim 1, **characterized in that** it provides a mark (2), obtained by creating a low-relief lozenge (21), obtained on the surface of the hole of the form plate (F₁) and as large as the entire clip, and by creating on the external surface of the extractor pin (P) a projection (22), which is conformed to the negative of the hook, such that, by mutual interpenetration, an empty space remains that is shaped as the volume of the clip (100) to be moulded.

4. EQUIPMENT FOR MOULDING HANGERS PROVIDED WITH CLIPS, according to the preceding claims, **characterized in that** the extractor pin (P) upperly ends up with a small block (34) fixedly applied, such as to form an only single-piece element (P+34) and on which small plate (34) the mark (1, 2) is partially or totally obtained.

5. EQUIPMENT FOR MOULDING HANGERS PROVIDED WITH CLIPS, according to claim 4, **characterized in that** it is conformed such as to obtain flat-section clips (100) by a mark (3) composed of a low-relief lozenge (31), obtained on the surface of the hole of the form plate (F₁) and as large as the entire clip, and of a projection (32), conformed to the negative of the hook, positioned on the plane surface (33) of the small block (34), firmly applied at the end of the extractor pin (P), such that, by the mutual lozenge/projection interpenetration, an empty space remains that is shaped as the volume of the clip (100) to be moulded.

6. PROCESS FOR MOULDING HANGERS PROVIDED WITH CLIPS, which uses the equipment according to one or more of the preceding claims, **characterized in that** it passes from the "open mould" position with the two extractor pins (P) moved backward to the "closed mould" position, such as to generate among the two form plates (F₁, F₂) the negative case of the piece which is to be obtained, i.e. the cavity that defines the shape of the arcuate body (K), and the two marks (1) that define the two opposite clips (100); then the material is injected such that the entire structure of the hanger (10) is obtained in a single step; then the mould is opened, and through removal by the extractor pins (P), the whole moulded hanger (10) is ejected and falls down or is collected; then extractor pins (P) move back inward, to prepare the mould for a new working step.

## Patentansprüche

1. AUSRÜSTUNG ZUM SPRITZGIESSEN VON KLEIDERBÜGELN MIT KLAMMERN, des Typs, der aus zwei einander gegenüberliegend angeordneten Formplatten (F₁, F₂) besteht, die von einer einander angenäherten Position (geschlossene Spritzgussform), um die Form des durch Einspritzen verschiedener Materialien spritzzugießenden Teils zu definieren, angefangen von synthetischem Kunststoff bis biologischem Kunststoff, zu einer einander beabstandeten Position (offene Form) variieren, um die Extraktorzangen (P), die an den Extraktionsplatten (Z₁, Z₂) in einer Richtung parallel zur Öffnungsrichtung der Spritzgussform gleitbar in der Formplatte (F₁) befestigt sind, um einen spritzgegossenen Kleiderbügel (10) zu extrahieren, der aus einem Körper (K) besteht, der mit zwei seitlichen Klammern (100) versehen ist, die aus einer Rippe (101) gebildet sind, die einen Haken (102) trägt,
wobei die Ausrüstung **dadurch gekennzeichnet ist, dass** sie dafür sorgt, dass die Markierungen, die erforderlich sind, um die zwei seitlichen Klammern (100) herzustellen, an dem oberen Teil der äußeren Seitenoberfläche der beiden Extraktorzangen (P) herausgearbeitet sind, die auf den vorgenannten, herzustellenden Seitenklammern (100) positioniert sind.

2. AUSRÜSTUNG ZUM SPRITZGIESSEN VON KLEIDERBÜGELN MIT KLAMMERN nach Anspruch 1, **dadurch gekennzeichnet, dass** sie eine Flachreliefmarkierung (1) bereitstellt, die vollständig auf der äußeren Oberfläche der Extraktorzange (P) herausgearbeitet ist, die einen großen Sitz (11) definiert, der die Rippe herstellt (101) die mit dem begrenzten Sitz (12) verbunden ist, der den Haken (102) realisiert.

3. AUSRÜSTUNG ZUM SPRITZGIESSEN VON KLEIDERBÜGELN MIT KLAMMERN nach Anspruch 1, **dadurch gekennzeichnet, dass** sie eine Markierung (2) bereitstellt, die durch Erzeugen eines Flachreliefraute (21) herausgearbeitet ist, die auf der Oberfläche des Loches der Formplatte (F₁) herausgearbeitet ist und so groß wie die ganze Klammer ist, und durch Erzeugen, auf der äußeren Oberfläche der Extraktorzange (P), einer Auskragung (22), die dem Negativ des Hakens angepasst ist, derart, dass durch gegenseitiges Durchdringen ein leerer Raum verbleibt, der wie das Volumen der spritzzugießenden Klammer (100) geformt ist.

4. AUSRÜSTUNG ZUM SPRITZGIESSEN VON KLEIDERBÜGELN MIT KLAMMERN nach den vorstehenden Ansprüchen, **dadurch gekennzeichnet, dass** die Extraktorzange (P) oben in einem kleinen Block (34) endet, der fest angebracht ist, derart, dass er ein nur einstückiges Element (P+34) bildet und auf dieser kleinen Platte (34) die Markierung (1, 2) teilweise oder vollständig herausgearbeitet ist.

5. AUSRÜSTUNG ZUM SPRITZGIESSEN VON KLEIDERBÜGELN MIT KLAMMERN nach Anspruch 4, **dadurch gekennzeichnet, dass** sie angepasst ist, um eine Flachprofilklammer (100) durch eine Markierung zu erhalten (3), die aus einer Flachreliefraute (31) besteht, die auf der Oberfläche des Loches der Formplatte (F₁) herausgearbeitet ist und so groß wie die ganze Klammer ist, und aus einer Auskragung (32), die dem Negativ des Hakens angepasst ist, der auf der ebenen Oberfläche (33) des kleinen Blockes (34) positioniert ist, der fest an einem Ende der Extraktorzange (P) angebracht ist, derart, dass durch gegenseitiges Rauten-/Auskragungsdurchdringen ein leerer Raum verbleibt, der wie das Volumen der spritzzugießenden Klammer (100) geformt ist.

6. VERFAHREN ZUM SPRITZGIESSEN VON KLEIDERBÜGELN MIT KLAMMERN, welches die Ausrüstung nach einem der vorstehenden Ansprüche verwendet, **dadurch gekennzeichnet, dass** es von der "offenen Spritzgussform"-Position mit den zwei Extraktorzangen (P) rückwärts in die "geschlossene Spritzgussform"-Position übergeht, derart, dass zwischen den beiden Formplatten (F₁, F₂) das Negativ des herauszuarbeitenden Teils erzeugt wird, d. h. der Hohlraum, der die Form des gekrümmten Körpers (K) definiert und die beiden Markierungen (1), die die beiden gegenüberliegenden Klammern (100) definieren; anschließend wird das Material eingespritzt, derart, dass die gesamte Struktur des Kleiderbügels (10) in einem einzigen Schritt herausgearbeitet wird; anschließend wird die Spritzgussform geöffnet und durch Entfernen mittels der Extraktorzangen (P) wird der gesamte spritzgegossene Kleiderbügel (10) ausgestoßen und fällt herunter oder wird gesammelt; anschließend werden die Extraktorzangen (P) einwärts bewegt, um die Spritzgussform für einen neuen Arbeitsschritt vorzubereiten.

## Revendications

1. ÉQUIPEMENT POUR LE MOULAGE DE CINTRES DOTÉS DE PINCES, du type constitué de deux plaques de forme (F₁, F₂) disposées mutuellement opposées, qui varient d'une position mutuellement rapprochée (moule fermé), pour définir la forme de la pièce à mouler au moyen de l'injection de différents matériaux, allant de plastique synthétique au biologique, à une position mutuellement éloignée (moule ouvert), pour permettre à des goupilles d'extraction (P), fixées sur des plaques d'extraction (Z₁, Z₂) pouvant coulisser le long d'une direction parallèle à la direction d'ouverture du moule, à l'intérieur de la plaque de forme (F₁), d'extraire un cintre moulé (10) constitué d'un corps (K) muni de deux pinces latérales (100), formé par une nervure (101) supportant un crochet (102),
ledit équipement **étant caractérisée en ce qu'** il prévoit que les marques, nécessaires pour réaliser les deux pinces latérales (100), soient obtenues au niveau de la partie supérieure de la surface latérale externe des deux goupilles d'extraction (P), qui sont positionnées au niveau des susmentionnées pinces latérales (100) à réaliser.

2. ÉQUIPEMENT POUR LE MOULAGE DE CINTRES DOTÉS DE PINCES, selon la revendication 1, **caractérisé en ce qu'**il prévoit une marque en bas-relief (1), entièrement obtenue sur la surface externe de la goupille d'extraction (P), qui définit un grand siège (11) qui réalise la nervure (101) associé à un siège (12) restreint qui réalise le crochet (102).

3. ÉQUIPEMENT POUR LE MOULAGE DE CINTRES DOTÉS DE PINCES, selon la revendication 1, **caractérisé en ce qu'**il prévoit une marque (2), obtenue en créant un losange en bas-relief (21), obtenu sur la surface de l'orifice de la plaque de forme (F₁) et aussi grand que la totalité de la pince, et en créant sur la surface externe de la goupille d'extraction (P) une saillie (22), qui est conformée au négatif du crochet, de sorte que, par interpénétration mutuelle, il reste un espace vide ayant la forme du volume de la pince (100) à mouler.

4. ÉQUIPEMENT POUR LE MOULAGE DE CINTRES DOTÉS DE PINCES, selon les revendications précédentes, **caractérisé en ce que** la goupille d'extraction (P) se termine en haut par un petit bloc (34) appliqué solidement, de sorte à former un élément en une seule pièce (P+34) et sur lequel petite plaque (34) la marque (1, 2) est partiellement ou totalement obtenue.

5. ÉQUIPEMENT POUR LE MOULAGE DE CINTRES DOTÉS DE PINCES, selon la revendication 4, **caractérisé en ce qu'**il est conformé de sorte à obtenir des pinces à section plate (100) grâce à une marque (3) constituée d'un losange en bas-relief (31), obtenu sur la surface de l'orifice de la plaque de forme (F₁) et aussi grand que la totalité de la pince, et d'une saillie (32), conformée au négatif du crochet, positionnée sur la surface plate (33) du petit bloc (34), appliqué solidement à l'extrémité de la goupille d'extraction (P), de sorte que, par l'interpénétration mutuelle losange/saillie, il reste un espace vide ayant la forme du volume de la pince (100) à mouler.

6. PROCÉDÉ POUR LE MOULAGE DE CINTRES DOTÉS DE PINCES, qui utilise l'équipement selon l'une ou plusieurs des revendications précédentes, **caractérisé en ce qu'**il passe de la position « moule ouvert » avec les deux goupilles d'extraction (P) déplacées vers l'arrière à la position « moule fermé », de sorte à générer entre les deux plaques de forme (F₁, F₂) le boîtier négatif de la pièce à obtenir, à savoir la cavité qui définit la forme du corps arqué (K), et les deux marques (1) qui définissent les deux pinces (100) opposées ; puis le matériau est injecté de sorte que toute la structure du cintre (10) soit obtenue en une seule étape ; ensuite le moule est ouvert, et à travers le retrait à l'aide des goupilles d'extraction (P), la totalité du cintre (10) moulé est éjectée et tombe vers le bas ou est recueillie ; puis des goupilles d'extraction (P) retournent à l'intérieur pour préparer le moule pour une nouvelle étape opérationnelle.
